# EUROPÄISCHE PATENTSCHRIFT

(11) **EP 1 852 295 B1**
(45) Veröffentlichungstag und Bekanntmachung des Hinweises auf die Patenterteilung: **24.12.2008**
(21) Anmeldenummer: 07004847.5
(22) Anmeldetag: 09.03.2007
(51) Int. Cl.: B60K 13/04, F01N 7/20

(54) **Abgasanlage**
Exhaust system
Système d'échappement

(30) Priorität: 04.05.2006 DE 102006020628
(43) Veröffentlichungstag der Anmeldung: 07.11.2007
(73) Patentinhaber: Dr. Ing. h.c. F. Porsche Aktiengesellschaft, 70435 Stuttgart (DE)
(72) Erfinder: Fritz, Andreas, 75443 Oetisheim (DE)

(56) Entgegenhaltungen:
- EP-A1- 1 582 713
- DE-A1- 10 136 350
- DE-A1- 19 940 102
- JP-A- 3 096 434

## Beschreibung

Die Erfindung bezieht sich auf eine Abgasanlage nach dem Oberbegriff des Anspruchs 1.

Endrohrblenden für Abgasanlagen sind in bekannter Weise am Endrohr der Abgasanlage befestigt und durch einen rundherum laufenden Ausschnitt eines Fahrzeugheckteils hindurchgeführt bzw. schließen mit diesem ab. Aufgrund von relativ starken Eigenbewegungen der Abgasanlage relativ zum Fahrzeugheckteil und einer thermischen Wirkung auf das Fahrzeugheckteil ist ein umlaufender Spalt zum Ausschnitt erforderlich, der diese Bedingungen erfüllt. Dieser Spalt ist relativ groß ausgeführt und deckt gleichermaßen alle Toleranzen aus der Fertigung, Montage sowie den möglichen Schwingbewegungen der Abgasanlage bzw. des Abgasendrohres sowie die auftretenden thermischen Ausdehnungen ab. Eine derartige Abgasanlage ist z.B. aus der JP 03 096 434 bekannt.

Aufgabe der Erfindung ist es, eine Abgasanlage mit einer Endrohrblende zu schaffen, die einerseits mit einem minimalen Spaltabstand in einem Ausschnitt eines Fahrzeugheckteils angeordnet ist und andererseits im Fahrzustand einen den thermischen Auswirkungen ausreichenden Spaltabstand für die Endrohrblende gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass der Spaltabstand für die Endrohrblende im Ausschnitt des Fahrzeugheckteils im kalten Zustand der Abgasanlage die Schwingungsbewegungen sowie Toleranzen aus der Fertigung und Montage berücksichtigt. Insbesondere soll der Spaltabstand in Kaltstellung der Abgasanlage relativ klein ausgeführt sein, aber in einer Warmstellung soll sich ein größerer Spaltabstand zwischen einem Teil der Endrohrblende und dem Ausschnitt ergeben, so dass die thermische Auswirkung auf die Karosseriebauteile vermindert wird.

Dies wird nach der Erfindung dadurch erzielt, dass die Endrohrblende trompetenförmig mit einem ersten Abschnitt kleinen Durchmesser und einem anschließenden endseitigen zweiten Abschnitt größeren Durchmessers ausgeführt ist. Der zweite Abschnitt weist in einer Kaltstellung der Abgasanlage eine Grundstellung mit einem Spaltabstand zum rundum verlaufenden Ausschnitt auf, der kleiner ist als der sich in einer Warmstellung bei thermischer Längenzunahme der Abgasanlage temporär veränderbare Spaltabstand zwischen der Endrohrblende und dem Ausschnitt. Durch thermische Auswirkungen auf die Abgasanlage im Fahrbetrieb des Kraftfahrzeugs kann sich die Endrohrblende entgegen der Fahrtrichtung aus dem Fahrzeugheckteil herausbewegen, was eine Spaltvergrößerung mit sich bringt und einen Luftdurchsatz durch den Spalt mit einem Abkühlungseffekt mit sich bringt.

Insbesondere ist nach der Erfindung vorgesehen, dass der erste stromauf des Abgasstromes angeordnete Abschnitt der Endrohrblende dem Durchmesser des Abgasrohres der Abgasanlage angepasst ist und mit diesem verbunden wird, wobei der anschließende Abschnitt über einen konvex bogenförmigen Übergangsbereich mit dem ersten Abschnitt der Endrohrblende verbindbar ist. Es ergibt sich hierdurch in vorteilhafter Weise ein Luftführungskanal mit einem größeren Spalt als in der Kaltstellung der Abgasanlage. In der Kaltstellung der Abgasanlage weist die Endrohrblende einen einer Grundstellung zugeordneten kleinen Spaltabstand im Ausschnitt des Fahrzeugheckteils auf und in der Warmstellung weist die Endrohrblende in einer Endstellung einen größeren Spaltabstand auf.

Durch den größeren Spaltabstand im Ausschnitt des Fahrzeugheckteils zwischen dem Übergangsbereich der beiden Abschnitte der Endrohrblende werden neben einem ausreichenden Freiraum für Schwingbewegungen im Fahrbetrieb auch die thermischen Auswirkungen auf das Fahrzeugheckteil verringert, das heißt, dass das Fahrzeugheckteil durch die abstrahlende Wärme der Abgasanlage durch den spaltbedingter maximalen Luftdurchsatz nicht zusätzlich belastet wird.

Ein Ausführungsbeispiel der Erfindung ist in den Zeichnungen dargestellt und wird im Folgenden näher beschrieben.

Es zeigt
- Fig. 1: eine schematische Darstellung der Abgasanlage mit Endrohrblende in einer Kaltstellung und
- Fig. 2: eine schematische Darstellung der Abgasanlage mit Endrohrblende in einer Warmstellung während eines Fahrbetriebs.

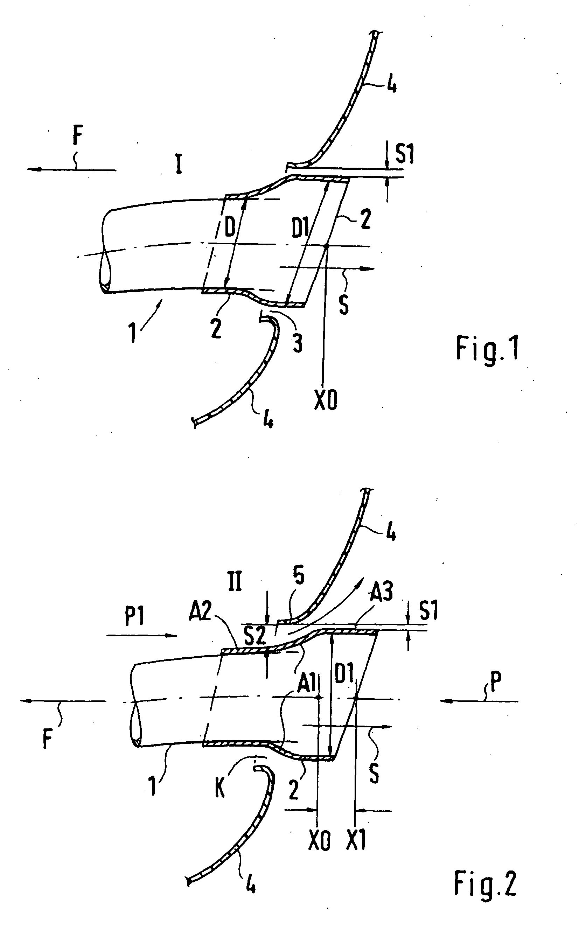

Wie in Fig. 1 näher dargestellt, ist an einem Abgasrohr 1 einer nicht dargestellten Abgasanlage eine Endrohrblende 2 gehalten, das durch einen Ausschnitt 3 eines Fahrzeugheckteils 4 ragt. Der Ausschnitt ist rundherum um die Endrohrblende ausgeführt.

Das Abgasendrohr 2 ist mit einem Spaltabstand S1 bzw. S2 in dem Ausschnitt 3 angeordnet, wobei der Spaltabstand S1 in Kaltstellung I der Abgasanlage und der Spaltabstand S2 in einer Warmstellung II der Abgasanlage gebildet ist bzw. wird.

Bei einer direkten Sicht in Pfeilrichtung P von hinten auf die Endrohrblende 2 erscheint nur der Spalt S1, sei es in der Kaltstellung I (Fig. 1) als auch in der Warmstellung II (Fig. 2).

Bei einer thermischen Erwärmung der Abgasanlage tritt die Endrohrblende 2 kontinuierlich aus dem Fahrzeugheckteil 4 heraus und zwar von der Stellung X0 (Kaltstellung I) in die Stellung X1 (Warmstellung II). Bei dieser thermischen Längenzunahme von X0 zu X1 (Fig. 2) ist ein Übergangsbereich A1 zwischen einem ersten Abschnitt A2 auf dem Abgasrohr 1 und einem anschließenden zweiten Abschnitt A3, der außenliegend des Fahrzeugheckteils 4 liegt, einem Begrenzungsrand 5 des Fahrzeugheckteils zugerichtet. Der rundum angeordnete Spalt S2 im Ausschnitt 3 bildet sich zwischen dem rundherum verlaufenden Rand 5 und dem Übergangsbereich A1 und dieser Spalt S 2 ist wesentlich größer als der Spalt S1, wodurch ein maximaler Luftdurchsatz in Pfeilrichtung P1 möglich, so dass das aus Kunststoff bestehende Fahrzeugheckteil 4 keine wesentliche Wärmebelastung im Wesentlichen durch Wärmestrahlung, Wärmeleitung erfährt.

Der durch den Spalt S2 gebildete Luftführungskanal K wird durch den Übergangsbereich A1 einerseits und dem Rand 5 andererseits gebildet, wobei der Übergangsbereich A1 konkav bogenförmig ausgerundet und der Rand 5 nach innen eingezogen und konvex bogenförmig ausgeführt ist.

## Patentansprüche

1. Abgasanlage mit einem Abgasendrohr und einer mit diesem verbundenen Endrohrblende, die durch einen Ausschnitt in einem Fahrzeugheckteil ragend angeordnet und mit diesem verbunden ist, **dadurch gekennzeichnet, dass** die Endrohrblende (2) trompetenförmig mit einem ersten Abschnitt (A2) kleinen Durchmessers (D) und einem anschließenden endseitigen zweiten Abschnitt (A3) größeren Durchmessers (D1) ausgeführt ist und dieser zweite Abschnitt (A3) der Endrohrblende (2) in einer Kaltstellung (I) der Abgasanlage eine Grundstellung mit einem Spaltabstand (S1) zum rundum verlaufenden Ausschnitt (3) aufweist, der kleiner als der sich in einer Warmstellung (II) bei thermischer Längenzunahme der Abgasanlage temporär veränderbare Spaltabstand (S2) zwischen der Endrohrblende (2) und dem Ausschnitt (3) ist.

2. Abgasanlage nach Anspruch 1, **dadurch gekennzeichnet, dass** der stromauf eines Abgasstromes (S) angeordnete erste Abschnitt (A2) kleinen Durchmessers dem Abgasrohr (1) angepasst und mit diesem verbunden ist und ein anschließender konvex bogenförmiger Übergangsbereich (A1) zwischen dem ersten Abschnitt (A2) und dem zweiten Abschnitt (A3) der Endrohrblende (2) angeordnet ist.

3. Abgasanlage nach den Ansprüchen 1 oder 2, **dadurch gekennzeichnet, dass** in der Kaltstellung (I) der Abgasanlage der kleinere Spaltabstand (S1) zwischen dem Ausschnitt (3) im Fahrzeugheckteil (4) und dem zweiten endseitigen Abschnitt (A3) der Endrohrblende (2) besteht.

4. Abgasanlage nach den Ansprüchen 1, 2 oder 3, **dadurch gekennzeichnet, dass** in der Warmstellung (II) der Abgasanlage der größere Spaltabstand (S2) zwischen dem rundum verlaufenden Ausschnitt (3) im Fahrzeugheckteil (4) und dem Übergangsbereich (A1) zwischen den beiden Abschnitte (A2) und A3) der Endrohrblende (2) besteht.

5. Abgasanlage nach den Ansprüchen 1, 2, 3 oder 4, **dadurch gekennzeichnet, dass** der konvex bogenförmige Übergangsbereich (A1) der Endrohrblende (2) zwischen den beiden Abschnitten (A2 und A3) mit dem nach innen eingezogenen Rand (5) des Ausschnitts (3) einen Luftdurchströmkanal (K) mit dem Spaltabstand (S2) ergibt.

6. Abgasanlage nach einem der vorhergehenden Ansprüche, **dadurch gekennzeichnet, dass** in der Kaltstellung (I) der Abgasanlage die Endrohrblende (2) einen in einer Grundstellung (X₀) zugeordneten Spaltabstand (S1) im Ausschnitt (3) des Fahrzeugheckteils (4) und in der Warmstellung (II) der Abgasanlage eine Endstellung (X₁) mit dem Spaltabstand (S2) aufweist.

7. Abgasanlage nach den Ansprüchen 1, 2, 3, 4 oder 5, **dadurch gekennzeichnet, dass** der Übergangsbereich (A1) durch einen gleichmäßigen Übergangskonus dargestellt ist.

## Claims

1. Exhaust system with an exhaust tailpipe and a tailpipe cover which is connected to the latter, is arranged such that it protrudes through a cutout in a vehicle rear part and is connected thereto, **characterized in that** the tailpipe cover (2) is of trumpet-shaped design with a first section (A2) of small diameter (D) and an adjoining, end-side second section (A3) of larger diameter (D1), and, in a cold position (I) of the exhaust system, said second section (A3) of the tailpipe cover (2) has a basic position with a gap clearance (S1) with respect to the cutout (3), which runs all around, that is smaller than the gap clearance (S2) between the tailpipe cover (2) and the cutout (3), which gap clearance is temporarily changeable in a hot position (II) upon a thermal increase in length of the exhaust system.

2. Exhaust system according to claim 1, **characterized in that** the first section (A2) of small diameter arranged upstream of an exhaust gas flow (S) is matched to the exhaust pipe (1) and is connected thereto, and an adjoining, convexly curved transition region (A1) is arranged between the first section (A2) and the second section (A3) of the tailpipe cover (2).

3. Exhaust system according to claim 1 or 2, **characterized in that,** in the cold position (I) of the exhaust system, the smaller gap clearance (S1) is between the cutout (3) in the vehicle rear part (4) and the second, end section (A3) of the tailpipe cover (2).

4. Exhaust system according to claims 1, 2 or 3, **characterized in that,** in the hot position (II) of the exhaust system, the larger gap clearance (S2) is between the cutout (3), which runs all around, in the vehicle rear part (4) and the transition region (A1) between the two sections (A2) and (A3) of the tailpipe cover (2).

5. Exhaust system according to claims 1, 2, 3 or 4, **characterized in that** the convexly curved transition region (A1) of the tailpipe cover (2) between the two sections (A2 and A3) produces together with the inwardly drawn-in edge (5) of the cutout (3) an air throughflow passage (K) with the gap clearance (S2).

6. Exhaust system according to one of the preceding claims, **characterized in that,** in the cold position (I) of the exhaust system, the tailpipe cover (2) has a gap clearance (S1) which is assigned in a basic position (X₀), in the cutout (3) of the vehicle rear part (4), and in the hot position (II) of the exhaust system, has an end position (X₁) with the gap clearance (S2).

7. Exhaust system according to claims 1, 2, 3, 4 or 5, **characterized in that** the transition region (A1) is depicted by a uniform transition cone.

## Revendications

1. Système d'échappement doté d'un tuyau d'extrémité d'échappement et d'un cache de tuyau d'extrémité relié à lui qui est disposé de façon saillante à travers un détouré réalisé dans une partie arrière de véhicule et relié à celle-ci, **caractérisé en ce que** le cache de tuyau d'extrémité (2) est réalisé en forme de trompette avec un premier segment (A2) de petit diamètre (D) et un second segment (A3) connexe situé du côté d'extrémité de plus grand diamètre (D1) et **en ce que** ce second segment (A3) du cache de tuyau d'extrémité (2) présente dans une position froide (I) du système d'échappement une position de base avec un écart de fente (S1), par rapport au détouré (3) l'entourant, inférieur à l'écart de fente (S2) situé entre le cache de tuyau d'extrémité (2) et le détouré (3) pouvant varier temporairement dans une position chaude (II) en cas d'accroissement de longueur dû à la chaleur du système d'échappement.

2. Système d'échappement selon la revendication 1, **caractérisé en ce que** le premier segment (A2) de plus petit diamètre disposé en amont d'un flux d'échappement (S) est adapté au tuyau d'échappement (1) et relié à lui et **en ce qu'**une zone de transition (A1) connexe en forme d'arc convexe est disposée entre le premier segment (A2) et le second segment (A3) du cache de tuyau d'extrémité (2).

3. Système d'échappement selon les revendications 1 ou 2, **caractérisé en ce que** dans la position froide (I) du système d'échappement, on obtient le plus petit écart de fente (S1) entre le détouré (3) réalisé dans la partie arrière de véhicule (4) et le second segment (A3) situé du côté d'extrémité du cache de tuyau d'extrémité (2).

4. Système d'échappement selon les revendications 1, 2 ou 3, **caractérisé en ce que** dans la position chaude (II) du système d'échappement, le plus grand écart de fente (S2) est obtenu entre le détouré (3) s'étendant de façon circonférentielle dans la partie arrière de véhicule (4) et la zone de transition (A1) située entre les deux segments (A2) et (A3) du cache de tuyau d'extrémité (2).

5. Système d'échappement selon les revendications 1, 2, 3 ou 4, **caractérisé en ce que** la zone de transition (A1) arquée dans le plan convexe du cache de tuyau d'extrémité (2) devient un canal d'écoulement traversant d'air (K) avec l'écart de fente (S2) entre les deux segments (A2 et A3) avec le bord (5) rentré vers l'intérieur du détouré (3).

6. Système d'échappement selon l'une quelconque des revendications précédentes, **caractérisé en ce que** dans la position froide (I) du système d'échappement, le cache de tuyau d'extrémité (2) comporte un écart de fente (S1) associé dans une position de base (X₀) dans le détouré (3) de la partie arrière de véhicule (4) et une position d'extrémité (X₁) dans la position chaude (II) du système d'échappement avec l'écart de fente (S2).

7. Système d'échappement selon les revendications 1, 2, 3, 4 ou 5, **caractérisé en ce que** la zone de transition (A1) est représentée par un cône de transition régulier.
